# EUROPEAN PATENT SPECIFICATION

(11) **EP 2 434 048 B1**
(45) Date of publication and mention of the grant of the patent: **07.12.2016**
(21) Application number: 11178675.2
(22) Date of filing: 24.08.2011
(51) Int. Cl.: D06M 11/83, D06M 13/35, D06M 15/21, D06M 15/263, D06M 15/356, D06M 16/00, A01N 43/36, A01N 59/16, A01N 59/20

(54) **Antimicrobial fabric finish**
Antimikrobieller Stoffabschluss
Fini de tissu antimicrobien

(30) Priority: 28.09.2010 CN 201010577724
(43) Date of publication of application: 28.03.2012
(73) Proprietor: Rohm and Haas Company, Philadelphia, PA 19106-2399 (US)
(72) Inventor: Ghosh, Tirthankar, Oreland, PA Pennsylvania 19075 (US); Liang, Randall, Shanghai 201101 (CN)
(74) Representative: Hoggins, Mark Andrew

(56) References cited:
- EP-A1- 2 228 486
- EP-A2- 1 584 235
- EP-A2- 1 925 720

## Description

### BACKGROUND:

One useful method of finishing a fabric item is the exhaustion process. In this method, all or part of a fabric item is submerged in a liquid solution that contains one or more fabric finishing compounds. During the submersion, some or all of the fabric finishing compound migrates from the solution to the fabric. After the fabric is removed from the solution and then dried, some amount of the fabric finishing compound is attached to the fabric. It is sometimes desired to use the exhaustion method in preference to other methods of finishing fabrics. For example, if the fabric item is not flat, the exhaustion method may be preferred because other methods only work well for flat fabric items. For another example, it is sometimes possible to choose conditions for an exhaustion process in which all or nearly all of a fabric finishing compound transfers from the solution to the fabric while the fabric is submerged; such processes may be preferred for one or more of the following reasons: (A) because such processes make more efficient use of the fabric finishing compound than non-exhaustion methods and/or (B) because, in such processes, the amount of fabric finishing compound that attaches to the fabric is controlled by the transfer process while the fabric item is submerged in the solution, and so it is not necessary to measure or control the amount of liquid solution that remains with the fabric item after the fabric item is removed from submersion in the liquid solution.

A common alternative method for fabric finishing is padding, in which a fabric item is dipped in a fabric finish solution and removed from the fabric finish solution. Then some of the solution is removed from the wet fabric in a controlled way to leave a pre-determined amount of the solution on the fabric. The amount of liquid solution remaining on the fabric is controlled, for example, by the weight pick up property of the fabric and nip rollers. The fabric with remaining liquid solution is then dried, and the fabric finish compound that had been in the solution remains on the fabric item. EP 1 925 720 and EP 2 228 486 each discloses treatment compositions comprising silver/polymer complexes, which are applied to fabrics via a padding process. Methods like padding do not make significant use of transfer of fabric finish compound from the liquid solution to the fabric during submersion. The amount of fabric finish compound that is finally deposited on the fabric is controlled by the amount of liquid solution that is applied to the fabric.

US 7,335,613 describes a treated fabric in which the substrate has a finish that contains a metal/polymer complex. Such complexes are known to provide antimicrobial activity.

Prior to the present invention, it was considered that such a metal/polymer complex could only be used in solutions that had pH higher than 7.5. It was considered that the complex would precipitate and become useless at lower pH, and so the pH of the fabric finishing solution was normally raised to a level high enough so that the complex was very stable in water. That pH is usually approximately 9. Such stable solutions were considered to be useful in padding methods of fabric finishing. It was further considered that, in such high-pH solutions, the complex was so stable in water that, if an exhaustion process were attempted, little or no complex would transfer from the solution to the fabric item. Therefore it was considered that these complexes were not suitable for use in exhaustion processes, because at high pH the complex was too stable and at low pH the complex would precipitate and the solution would become useless.

It is desired to provide a composition that contains one or more metal/polymer complexes and that is suitable for fabric finishing using an exhaustion process.

### STATEMENT OF THE INVENTION:

The present invention provides an exhaustion process for finishing fabric, consisting of submerging all or part of said fabric in an antimicrobial composition, then removing said fabric from said composition, and then drying said fabric or allowing said fabric to dry, wherein said antimicrobial composition is a liquid and wherein said antimicrobial composition comprises water and a metal/polymer complex,
wherein the pH of said composition is 6.5 or lower;
wherein the concentration of said metal/polymer complex is from 0.005% to 0.1% by weight based on the weight of said composition;
wherein said metal is selected from copper, silver, gold, tin, zinc, and combinations thereof;
wherein said polymer comprises monomer residues selected from residue A, residue B, residue C, residue D, and combinations thereof;
wherein said polymer contains 99.5% or less by weight of residues of residue B, based on the weight of said polymer;
wherein residue A is 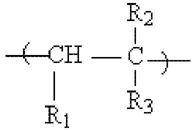
wherein residue B is 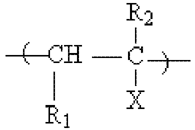
wherein residue C is 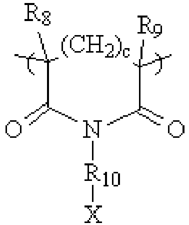
wherein residue D is the residue of a crosslinking monomer,
   wherein
   X is an unsaturated or aromatic heterocycle having at least one hetero atom selected from N, O and S;
   c is 0 or 1;
   R₁ is selected from H, CH₃ and -CO₂R₄; where R₄ is selected from H, CH₃, C₂H₅, a C₃-C₂₄ alkyl;
   R₂ is selected from H, CH₃, C₂H₅, phenyl, -CH₂CO₂R₅ and -CO₂R₅; where R₅ is selected from (I)-(V),
      (I) H;
      (II) 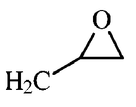
      (III) -(CH₂CH(R₁₁)O)ₙH;
      (IV) -(CH₂CH(R₁₁)O)ₙCOCH₂COCH₃; and,
      (V) 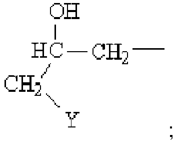
where R₁₁ is selected from H, methyl and phenyl; n is an integer from 1 to 20; Y is selected from OH, SO₃Z and X; where Z is selected from H, sodium, potassium and NH₄⁺; with the proviso that when the polymer contains 0 wt% of monomer residues of residue B and 0 wt% of monomer residues of residue C, R₂ is -CH₂CO₂R₅ or -CO₂R₅, R₅ is (V) and Y is X;
R₃ is selected from H, methyl, phenyl, sulfonated phenyl, phenol, acetate, hydroxy, a fragment O-R₁, where R₁ is as defined previously, -CO₂R₁₂ and -CONR₆R₇; where R₆ and R₇ are independently selected from H, methyl, ethyl, C(CH₃)₂CH₂SO₃Z, where Z is as defined previously, C₃-C₈ alkyl and a combined ring structure and R₁₂ is selected from H, CH₃, C₂H₅ and C₃-C₂₄ alkyl;
R₈ and R₉ are independently selected from hydrogen, methyl, ethyl and C₃-C₄ alkyl;
R₁₀ is selected from C₁-C₈ alkyl, C₂-C₈ alkenyl, C₆-C₁₀ unsaturated acyclic, C₆-C₁₀ cyclic, C₆-C₁₀ aromatic, C₂-C₄ alkylene oxide and poly (C₂-C₄ alkylene)_{b} oxides; where b is an integer from 2 to 20;

### DETAILED DESCRIPTION:

As used herein, when a ratio of two numbers is said to be "X: 1 or higher," it is meant that the ratio has the value Y:1, where Y is equal to or greater than X. Similarly, when a ratio of two numbers is said to be "W:1 or lower," it is meant that the ratio has the value Z:1, where Z is equal to or lower than W.

As used herein, a liquid is a composition that is in the liquid state at one atmosphere pressure over a range of temperatures that includes 15°C to 85°C.

A "polymer," as used herein and as defined by FW Billmeyer, JR. in Textbook of Polymer Science, second edition, 1971, is a relatively large molecule made up of the reaction products of smaller chemical repeat units. Polymers may have structures that are linear, branched, star shaped, looped, hyperbranched, crosslinked, or a combination thereof; polymers may have a single type of repeat unit ("homopolymers") or they may have more than one type of repeat unit ("copolymers"). Copolymers may have the various types of repeat units arranged randomly, in sequence, in blocks, in other arrangements, or in any mixture or combination thereof.

Polymer molecular weights can be measured by standard methods such as, for example, size exclusion chromatography (SEC, also called gel permeation chromatography or GPC). Generally, polymers have weight-average molecular weight (Mw) of 1,000 or more. Polymers may have extremely high Mw; some polymers have Mw above 1,000,000; typical polymers have Mw of 1,000,000 or less. Some polymers are crosslinked, and crosslinked polymers are considered to have infinite Mw. Some polymers are characterized by Mn, the number-average molecular weight.

As used herein "weight of polymer" means the dry weight of polymer.

Molecules that can react with each other to form the repeat units of a polymer are known herein as "monomers." Each monomer, after incorporation into a polymer by a polymerization reaction, becomes a "residue" of that monomer contained in that polymer.

The term "fiber" or "textile fiber" as used herein refers to a unit of matter which is capable of being spun into a yarn or made into a fabric by bonding or by interlacing in a variety of ways including, for example, weaving, knitting, braiding, felting, twisting or webbing.

The term "yarn" as used herein refers to a strand of textile fiber in a form suitable for weaving, knitting, braiding, felting, twisting, webbing or otherwise fabricating into a fabric.

The term "fabric" as used herein refers to any woven, non-woven, knitted, or felted material that is produced from, or in combination with, any natural or manufactured fiber, yarn or substitute therefore.

The term "treated fabric" as used herein refers to a fabric treated with a finish of the present invention.

The term "metal/polymer complex" as used herein refers to a composition in which a metal atom and a polymer are both present. While the present invention is not limited to any specific theory, it is considered that in the compositions of the present invention described herein, a metal atom forms at least one metal-ligand bond with at least one ligand that is covalently bound to a polymer.

The term "alkyl" as used herein includes both straight chain, branched and cyclic alkyl groups.

The term "alkenyl" as used herein includes both straight chain and branched chain alkenyl groups.

The term "(meth)acrylates" used herein encompasses both methacrylates and acrylates.

The term "antimicrobial" means herein capable of killing, inhibiting the growth of, or controlling the growth of microbes, including bacteria and fungi.

Microbes that are affected by antimicrobial composition of the present invention include, but are not limited to *Aureobasidium pullulans*, *Bacillus cereus*, *Bacillus thuringiensis*, *Chaetomium globosum*, *Enterobacter aerogines, Escherichia coli, Gliocladtum virens*, *Klebsiella Pheumoniae, Legionella pneumpophila, Listeria Monocytogenes*, *Mycobacterium tuberlulosis, Porphyromonas gingivalis*, *Proteus mirabilis, Proteus vulgaris*, *Pseudomonas aeruginosa, Saccharomyces cerevisiae*, *Salmonella gallinarum, Salmonella typhimurium*, *Staphylococcus aureus*, *Staphylococcus epidermidis, Streptococcus agalactiae, Streptococcus faecalis, Streptococcus mutans*, *Trycophyton malmsten, Vibrio parahaemolyticus, Stachybotrys*, *Aspergillus niger, Candida albicans and Penicillium funiculosum*.

Unless otherwise specified, temperatures discussed herein are in degrees centigrade (°C), and references to percentages (%) are by weight, and "ppm" means parts per million by weight.

Unsaturated or aromatic heterocycles suitable for use as group X with the present invention include, for example, 5 to 7-membered heterocycles having some degree of unsaturation; aromatic heterocycles having at least one hetero atom selected from N, O and S atoms; isomers of such heterocycles and combinations thereof. In addition, suitable heterocycles may include, for example, 5 to 7-membered heterocycles that are fused together to form larger 9 to 14 membered heterocycles having at least one N, O or S atom; isomers of such heterocycles and combinations thereof. Additional heterocycles suitable for use with the present invention include 5 to 7-membered heterocycles that are fused with a carbocycle to form larger 9 to 14-membered heterocycles.

In preferred embodiments, the antimicrobial compositions include a polymer comprising a heterocyclic group selected from imidazole; thiophene; pyrrole; oxazole; thiazoles and their respective isomers (e.g., thiazol-4-yl, thiazol-3-yl and thiazol-2-yl); tetrazole; pyridine; pyridazine; pyrimidine; pyrazine; azoles; indazoles; triazoles and their respective isomers (e.g., 1,2,3-triazole and 1,2,4-triazole); and combinations thereof, such as imidazole 1,2,3-triazole-1,2,4-triazole; benzotriazole; methyl-benzotriazole; benzothiazole; methylbenzothiazole; benzimidazole and methyl benzimidazole. In preferred aspects of these embodiments, the antimicrobial compositions include a polymer comprising a heterocyclic group selected from imidazole, benzotriazole and benzimidazole. In more preferred aspects of these embodiments, the antimicrobial compositions include a polymer comprising an imidazole group.

In preferred embodiments of the present invention, the antimicrobial compositions comprise a polymer which comprises residues of at least one heterocyclic containing monomer (residue B) and at least one non-heterocyclic containing monomer (residue A). In preferred aspects of these embodiments, the ratio of the heterocyclic containing monomers to the non-heterocyclic containing monomers is 95:5 to 5:95; preferably 80:20 to 20:80; more preferably 60:40 to 40:60. In preferred aspects of these embodiments, the at least one heterocyclic containing monomer is vinylimidazole.

In preferred embodiments of the present invention, the antimicrobial compositions comprise a polymer which comprises a heterocyclic containing monomer complexed with silver. In preferred aspects of these embodiments, the weight ratio of the heterocyclic containing monomer to silver is 95:5 to 5:95; preferably 90: 10 to 10:90; more preferably 80:20 to 20:80. In preferred aspects of these embodiments, the molar ratio of the silver to the heterocyclic containing monomer is 10:1 1 to 1:10; preferably 4:1 to 1:4; more preferably 2:1 to 1:2. In preferred aspects of these embodiments, the heterocyclic containing monomer is vinylimidazole.

Preferred monomers that produce residue A include (meth)acrylic acid, substituted and unsubstituted esters of (meth)acrylic acid, substituted and unsubstituted amides of (meth)acrylic acid, other vinyl monomers, and mixtures thereof. More preferred are (meth)acrylic acid, C₁ to C₈ alkyl esters of (meth)acrylic acid, and mixtures thereof. More preferred is a mixture of (meth)acrylic acid and one or more unsubstituted C₁ to C₈ alkyl ester of (meth)acrylic acid.

The preferred amount of residue A is, by weight based on the weight of the polymer, at least 10%; more preferably at least 20%; more preferably at least 30%; more preferably at least 40%. The preferred amount of residue A is, by weight based on the weight of the polymer, at most 80%; more preferably at most 70%; more preferably at most 60%.

The preferred amount of residue B is, by weight based on the weight of the polymer, at least 10%; more preferably at least 20%; more preferably at least 30%; more preferably at least 35%. The amount of residue B is, by weight based on the weight of the polymer, at most 99.5%; preferably at most 80%; more preferably at most 70%; more preferably at most 60%; more preferably at most 50%.

In preferred embodiments of the present invention, the antimicrobial compositions comprise a polymer which contains residues of one or more crosslinking monomer (i.e., residue D). In preferred aspects of these embodiments, the polymer contains, by weight based on weight of polymer, residues of one or more crosslinking monomer in the amount of at least 0.5%, more preferably at least 2%, more preferably at least 5%, more preferably at least 8%. In preferred aspects of these embodiments, the polymer contains, by weight based on weight of polymer, residues of one or more crosslinking monomer in the amount of at most 60%, more preferably at most 50%, more preferably at most 40%, more preferably at most 30%, more preferably at most 20%.

Crosslinking monomers suitable for use with the present invention to produce residue D include any known crosslinking monomer provided that the physical and chemical stability of the antimicrobial composition is substantially unaffected by inclusion of the crosslinking monomer. In preferred embodiments of the present invention, the antimicrobial compositions may comprise a polymer containing residues of a multifunctional (meth)acrylate monomer selected from allyl methacrylate (ALMA); divinylbenzene (DVB); ethyleneglycol diacrylate (EGDA); ethyleneglycol dimethacrylate (EGDMA); 1,3-butanediol dimethacrylate (BGDMA); diethyleneglycol dimethacrylate (DEGDMA); tripropyleneglycol diacrylate (TRPGDA); trimethylolpropane trimethacrylate (TMPTMA); trimethylolpropane triacrylate (TMPTA) and combinations thereof. In preferred aspects of these embodiments, the antimicrobial compositions comprise a polymer containing a crosslinker selected from TMPTMA, TMPTA and combinations thereof. In more preferred aspects of these embodiments, the antimicrobial compositions comprises a polymer that contains residues of TMPTA.

In preferred embodiments of the present invention, the antimicrobial composition exhibits an average particle size of less than 200 nm; preferably less than 150 nm; more preferably less than 100 nm; more preferably less than 75 nm; more preferably less than 50 nm; more preferably less than 25 nm; more preferably less than 20 nm; more preferably less than 15 nm; more preferably less than 10 nm; more preferably less than 8 nm; more preferably less than 5 nm. In preferred embodiments of the present invention, the antimicrobial composition exhibits an average particle size of more than 1 nm.

In preferred embodiments of the present invention, the antimicrobial composition comprises a polymer exhibiting a number average molecular weight of less than 500,000; preferably of less than 100,000; more preferably of less than 50,000; more preferably of less than 10,000; more preferably of less than 5,000. In preferred embodiments of the present invention, the antimicrobial composition comprises a polymer exhibiting a number average molecular weight of more than 1,000.

In preferred embodiments of the present invention, the antimicrobial composition comprises a metal complexed with the polymer, wherein the metal is selected from copper, silver, gold, tin, zinc and combinations thereof. In preferred aspects of these embodiments, the metal is selected from copper, silver, gold and combinations thereof. In more preferred aspects of these embodiments, the metal is selected from copper, silver and combinations thereof. In more preferred aspects of these embodiments, the metal is a combination of zinc and silver. In more preferred aspects of these embodiments, the metal is silver.

In preferred embodiments of the present invention, the antimicrobial composition contains metal in an amount by weight based on the weight of the antimicrobial composition, at least 20 ppm; more preferably at least 30 ppm, more preferably at least 50 ppm. In preferred embodiments of the present invention, the antimicrobial composition contains metal in an amount by weight based on the weight of the antimicrobial composition, at most 15%; more preferably at most 5%; more preferably at most 10%; more preferably at most 3%; more preferably at most 1%; more preferably 0.3%; more preferably 0.1%; more preferably 0.03%.

The preferred amount of metal/polymer complex, by weight based on the weight of the composition, is at least 0.005%; more preferably at least 0.01%. The preferred amount of metal/polymer complex, by weight based on the weight of the composition, is at most 0.5%; more preferably at most 0.2%; more preferably at most 0.1%.

In preferred embodiments of the present invention, the metal in the antimicrobial composition is silver.

In some embodiments of the present invention, the antimicrobial composition comprises a combination of zinc and silver. In some aspects of these embodiments, the antimicrobial composition comprises 0.3 wt% to 40 wt% silver and 1 wt% to 15 wt% zinc.

In preferred embodiments of the present invention, the antimicrobial composition comprises a vinylimidazole copolymer complexed with silver.

As used herein, the term "silver" refers to silver metal that is incorporated into an antimicrobial composition of the present invention. While not wanting to be bound as to the oxidation state of the silver (Ag⁰, Ag¹⁺ or Ag²⁺) that is incorporated into the antimicrobial composition, silver may be added to the antimicrobial composition by washing the polymer in a silver solution such as silver nitrate in deionized water ("DI"). Aside from DI, other liquid media can also be used such as water, aqueous buffered solutions and organic solutions such as polyethers or alcohols. Other sources of silver include but are not limited to silver acetate, silver citrate, silver iodide, silver lactate, silver picrate and silver sulfate. The concentration of silver in these solutions can vary from the concentration required to add a known quantity of silver to the antimicrobial composition to a saturated silver solution.

In some embodiments of the present invention, the finish may optionally further comprise one or more organic antimicrobial agent (i.e., an antimicrobial agent that does not contain metal). Suitable organic antimicrobial agents may include any conventional antimicrobial agent provided that the physical and chemical stability of the antimicrobial composition is substantially unaffected by such inclusion. In some aspects of these embodiments, the antimicrobial agent may be selected from 3-isothiazolone; 3-iodo-2-propynylbutylcarbamate; 2-bromo-2-nitropropanediol; glutaric dialdehyde; 2-n-octyl-3-isothiazolone; sodium 2-pyridinethiol-1-oxide; p-hydroxy benzoic acid alkyl ester; tris(hydroxymethyl)nitromethane; dimethylol-dimethyl-hydantion; benzisothiazolone and 2,4,4'-trichloro-2'-hydroxy-diphenyl ether.

In some embodiments of the present invention, the finish may optionally further comprise a disinfecting agent. Suitable disinfecting agents include any conventional disinfectant, provided that the physical and chemical stability of the antimicrobial composition is substantially unaffected by such inclusion. In some aspects of these embodiments, the disinfecting agent may be selected from quaternary ammonium disinfectants, phenolic disinfectants, halide based disinfectants and combinations thereof. In some aspects of these embodiments, the disinfecting agent may be selected from a chlorine based disinfectant and a bromine based disinfectant. In some aspects of these embodiments, the disinfecting agent may be selected from an N-halamine, a bleach, a hydantoin and combinations thereof.

In preferred embodiments of the present invention, the treated fabric exhibits an initial applied metal concentration of, by weight based on the weight of the treated fabric, at least 10 ppm; more preferably at least 30 ppm; more preferably at least 100 ppm. In preferred embodiments of the present invention, the treated fabric exhibits an initial applied metal concentration of, by weight based on the weight of the treated fabric, at most 1,000 ppm; more preferably at most 500 ppm.

The fabric suitably comprises a multiplicity of fibers of any composition and of any construction. For example, in some embodiments of the present invention, the fabric may comprise a knit material, a woven material, a non-woven material or a combination thereof. In some aspects of these embodiments, the fabric may comprise a non-woven material.

The fibers that are included in the fabric may be of any type. Suitable fibers include natural fibers (i.e., those from plant or animal sources), synthetic organic fibers, and inorganic fibers.

Natural fibers suitable for use with the present invention may include, for example, silk, cotton, wool, flax, fur, hair, cellulose, ramie, hemp, linen, wood pulp and combinations thereof.

Synthetic organic fibers suitable for use with the present invention may be derived from materials including, for example polyolefins, such as polyethylene, polypropylene and polybutylene; halogenated polymers, such as polyvinyl chloride; polyaramids, such as poly-p-phenyleneteraphthalamid (e.g. Kevlar® fibers available from DuPont), poly-m-phenyleneteraphthalamid (e.g., Nomex® fibers available from DuPont); melamine and melamine derivatives (e.g., Basofil® fibers available from Basofil Fibers, LLC); polyesters, such as polyethylene terephthalate, polyester/polyethers; polyamides, such as nylon 6 and nylon 6,6; polyurethanes, such as Tecophilic® aliphatic thermoplastic polyurethanes available from Noveon; acetates; rayon acrylics; and combinations thereof.

Inorganic fibers suitable for use with the present invention may include, for example, fiberglass, boron fibers and rock wool.

In preferred embodiments of the present invention, the fibers comprise one or more of cotton, Nylon-6; Nylon-6,6; polypropylene, polyethylene terephthalate, and mixtures thereof.

The antimicrobial composition is a liquid, and the antimicrobial composition contains water. In some embodiments of the present invention, the antimicrobial composition may also contain one or more low molecular weight organic solvent. In some aspects of these embodiments, the low molecular weight organic solvent may include, for example, ethanol, methanol, n-propanol, isopropanol and mixtures thereof.

In preferred embodiments of the present invention, the antimicrobial composition contains water in the amount, by weight, based on the weight of the antimicrobial composition, of at least 50%; preferably at least 75%; more preferably at least 85%; more preferably at least 90%; more preferably at least 95%.

The composition has pH of 6.5 or lower; preferably 5.5 or lower. The composition preferably has pH of 3 or higher; more preferably 4 or higher.

The antimicrobial composition is as a treatment solution for applying metal/polymer complex to fabric using an exhaustion process. Such a process involves submerging all or part of a fabric item in the antimicrobial composition. In preferred embodiments, the ratio of the weight of antimicrobial composition to the weight that the submerged portion of fabric had when it was dry, prior to submersion, is 5:1 or higher; more preferably 10:1 1 or higher; more preferably 15:1 or higher. In preferred embodiments, the ratio of the weight of antimicrobial composition to the weight that the submerged portion of fabric had when it was dry, prior to submersion, is 50:1 or lower; more preferably 30:1 or lower; more preferably 25:1 or lower.

In the practice of the present invention, the fabric is dried or is allowed to dry subsequent to the application of the antimicrobial composition thereto. Drying of the treated fabric may serve to remove moisture and other volatile components therefrom. The treated fabric may be dried using a technique selected from, for example, convection drying, contact drying, radiation drying and combinations thereof.

The treated fabrics of the present invention may advantageously be used in a variety of materials to impart antimicrobial properties thereto, including, for example, apparel, apparel interlining, upholstery, carpeting, padding, ceiling tiles, acoustical tiles, backing, wall coverings, roofing products, house wraps, insulation, bedding, wiping cloths, towels, gloves, rugs, floor mats, drapery, napery, textile bags, awnings, vehicle covers, boat covers, tents, agricultural coverings, geotextiles, automotive headliners, filtration media, dust masks, fiber fill, envelopes, tags, labels, diapers, feminine hygiene products (e.g., sanitary napkins, tampons), laundry aids (e.g., fabric dryer-sheets), wound care products and medical care products (e.g., sterile wraps, caps, gowns, masks, drapings).
It is to be understood that for purposes of the present examples that each operation disclosed herein is performed at 25°C unless otherwise specified.

### EXAMPLES

In the examples below we used a solution (labeled silver-polymer solution) containing (based on the weight of the solution) 22% by weight of an acrylic polymer , 3% by weight silver, 3% by weight ammonium nitrate, ethanol (42% by weight), water (22% by weight) and ammonium hydroxide (6% by weight) and butanol (2% by weight). The polymer was, based on the weight of polymer, 45% by weight butyl acrylate, 45% by weight vinylimidazole, and 5% by weight acrylic acid.

### Examples 1-6

To tap water was added the indicated amount of SilvaDur™ ET (see Table 1), thus forming the silver-polymer solution described above. To this solution was added glacial acetic acid to adjust the pH to the value shown in Table 1. In to this solution was introduced enough fabric to obtain a solution/fabric weight ratio of 20:1. The temperature of the treatment bath was increased to the temperature indicated in Table 1. To calculate the weight ratio of solution to fabric, the fabric weight is the weight of dry fabric prior to submersion in the solution. Fabric was kept submerged in the solution at the temperature shown for 20 minutes. The % shown below is the concentration of complex in the solution, by weight based on the weight of the solution. "T" is temperature. The "target" is the amount of silver (by weight based on the weight of the treated fabric) that is calculated to be present on the fabric, based on the assumption that all the silver in the solution is deposited onto the fabric. Fabric was either cotton or polyethyleneterphthalate (PET). The solution was cooled, the fabric was squeezed and dried. The amount of silver in the fabric was determined by XRF (X-ray fluorescence) spectroscopy. In some samples different sections of the treated fabric were analyzed to determine the homogeneity of the treatment. The amount of silver in the recovered solution was determined by ICP-AES (Inductively Coupled Plasma-Atomic Emission Spectrometry).

**Table 1.**

| Example No. | Fabric | Silver-polymer solution % | pH | T (°C) | Ag ppm in bath (after treatment) | Ag ppm Target in fabric | Ag ppm Measured in fabric |
|---|---|---|---|---|---|---|---|
| 1 | Cotton | 0.05 | 4.9 | 100 | 0.5 | 300 | 300 |
| 2 | PET | 0.06 | 4.6 | 100 | 0.7 | 294 | 267, 298 |
| 3 | PET | 0.04 | 4.7 | 95 | | 240 | 171, 336, 247 |
| 4 | PET | 0.04 | 4.7 | 60 | | 240 | 115, 143, 168 |
| 5 | PET | 0.016 | 5.0 | 60 | | 90 | 70, 64 |
| 6 | PET | 0.016 | 4.6 | 60 | | 90 | 37, 27 |

The data in Table 1 show that significant amounts of the silver is transferred to the fabric via the exhaustion process. This is corroborated by the fact that in Example 1 and Example 2, analysis of the solution, after the exhaustion process, showed very little silver.

## Claims

1. An exhaustion process for finishing fabric, consisting of submerging all or part of said fabric in an antimicrobial composition, then removing said fabric from said composition, and then drying said fabric or allowing said fabric to dry,
wherein said antimicrobial composition is a liquid,
wherein said antimicrobial composition comprises water and a metal/polymer complex,
wherein the pH of said composition is 6.5 or lower;
wherein the concentration of said metal/polymer complex is from 0.005% to 0.1% by weight based on the weight of said composition;
wherein said metal is selected from copper, silver, gold, tin, zinc, and combinations thereof;
wherein said polymer comprises monomer residues selected from residue A, residue B, residue C, residue D, and combinations thereof;
wherein said polymer contains 99.5% or less by weight of residues of residue B, based on the weight of said polymer;
wherein residue A is 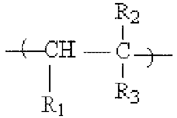 wherein residue B is 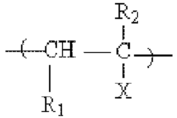 wherein residue C is 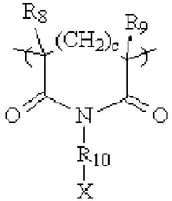 wherein residue D is the residue of a crosslinking monomer,
wherein
X is an unsaturated or aromatic heterocycle having at least one hetero atom selected from N, O and S;
c is 0 or 1;
R₁ is selected from H, CH₃ and -CO₂R₄; where R₄ is selected from H, CH₃, C₂H₅, a C₃-C₂₄ alkyl;
R₂ is selected from H, CH₃, C₂H₅, phenyl, -CH₂CO₂R₅ and -CO₂R₅; where R₅ is selected from (I)-(V),
(I) H;
(II) 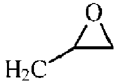
(III) -(CH₂CH(R₁₁)O)ₙH;
(IV) (CH₂CH(R₁₁)O)ₙCOCH₂COCH₃; and,
(V) 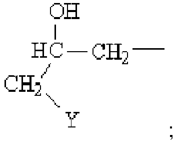 where R₁₁ is selected from H, methyl and phenyl; n is an integer from 1 to 20; Y is selected from OH, SO₃Z and X; where Z is selected from H, sodium, potassium and NH₄⁺; with the proviso that when the polymer contains 0 wt% of monomer residues of residue B and 0 wt% of monomer residues of residue C, R₂ is -CH₂CO₂R₅ or -CO₂R₅, R₅ is (V) and Y is X;
R₃ is selected from H, methyl, phenyl, sulfonated phenyl, phenol, acetate, hydroxy, a fragment O-R₁, where R₁ is as defined previously, -CO₂R₁₂ and -CONR₆R₇; where R₆ and R₇ are independently selected from H, methyl, ethyl, C(CH₃)₂CH₂SO₃Z, where Z is as defined previously, C₃-C₈ alkyl and a combined ring structure and R₁₂ is selected from H, CH₃, C₂H₅ and C₃-C₂₄ alkyl;
R₈ and R₉ are independently selected from hydrogen, methyl, ethyl and C₃-C₄ alkyl;
R₁₀ is selected from C₁-C₈ alkyl, C₂-C₈ alkenyl, C₆-C₁₀ unsaturated acyclic, C₆-C₁₀ cyclic, C₆-C₁₀ aromatic, C₂-C₄ alkylene oxide and poly (C₂-C₄ alkylene)_{b} oxides; where b is an integer from 2 to 20.

2. The process of claim 1, wherein said metal is silver.

3. The process of claim 1, wherein said polymer comprises one or more residue of vinylimidazole.

## Patentansprüche

1. Ein Ausziehverfahren zum Appretieren von Gewebe, das darin besteht, das Gewebe vollständig oder teilweise in eine antimikrobielle Zusammensetzung einzutauchen, dann das Gewebe aus der Zusammensetzung zu entfernen und dann das Gewebe zu trocknen oder das Gewebe trocknen zu lassen,
wobei die antimikrobielle Zusammensetzung eine Flüssigkeit ist,
wobei die antimikrobielle Zusammensetzung Wasser und einen Metall/PolymerKomplex beinhaltet,
wobei der pH-Wert der Zusammensetzung 6,5 oder niedriger ist;
wobei die Konzentration des Metall/Polymer-Komplexes 0,005 Gew.-% bis 0,1 Gew.-%, bezogen auf das Gewicht der Zusammensetzung, beträgt;
wobei das Metall aus Kupfer, Silber, Gold, Zinn, Zink und Kombinationen davon ausgewählt ist;
wobei das Polymer Monomerrückstände beinhaltet, die aus Rückstand A, Rückstand B, Rückstand C, Rückstand D und Kombinationen davon ausgewählt sind;
wobei das Polymer 99,5 Gew.-% oder weniger Rückstände von Rückstand B, bezogen auf das Gewicht des Polymers, enthält;
wobei Rückstand A Folgendes ist: 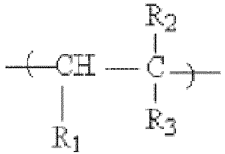 wobei Rückstand B Folgendes ist: 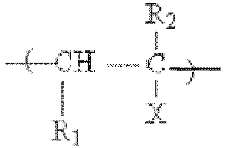 wobei Rückstand C Folgendes ist: 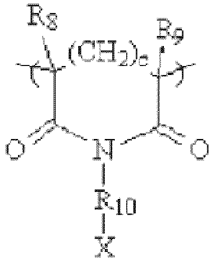 wobei Rückstand D der Rückstand eines Vernetzungsmonomers ist,
wobei
X ein ungesättigter oder aromatischer Heterozyklus mit mindestens einem Heteroatom ist, das aus N, O und S ausgewählt ist;
c 0 oder 1 ist;
R₁ aus H, CH₃ und -CO₂R₄ ausgewählt ist; wobei R₄ aus H, CH₃, C₂H₅, einem C₃-C₂₄-Alkyl ausgewählt ist;
R₂ aus H, CH₃, C₂H₅, Phenyl, -CH₂CO₂R₅ und -CO₂R₅ ausgewählt ist; wobei R₅ aus (I)-(V) ausgewählt ist,
(I) H;
(II) 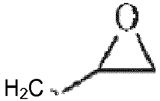
(III) -(CH₂CH(R₁₁)O)ₙH;
(IV) (CH₂CH(R₁₁)O)ₙCOCH₂COCH₃; und,
(V) 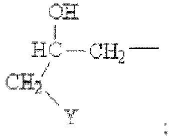
wobei R₁₁ aus H, Methyl und Phenyl ausgewählt ist; n eine ganze Zahl von 1 bis 20 ist; Y aus OH, SO₃Z und X ausgewählt ist; wobei Z aus H, Natrium, Kalium und NH₄⁺ ausgewählt ist; mit der Maßgabe, dass, wenn das Polymer 0 Gew.-% Monomerrückstände von Rückstand B und 0 Gew.-% Monomerrückstände von Rückstand C enthält, R₂ -CH₂CO₂R₅ oder -CO₂R₅ ist, R₅ (V) ist und Y X ist;
R₃ aus H, Methyl, Phenyl, sulfoniertem Phenyl, Phenol, Acetat, Hydroxy, einem Fragment O-R₁, wobei R₁ wie vorher definiert ist, -CO₂R₁₂ und -CONR₆R₇ ausgewählt ist; wobei R₆ und R₇ unabhängig ausgewählt sind aus H, Methyl, Ethyl, C(CH₃)₂CH₂SO₃Z, wobei Z wie vorher definiert ist, C₃-C₈-Alkyl und einer kombinierten Ringsstruktur und R₁₂ aus H, CH₃, C₂H₅ und C₃-C₂₄-Alkyl ausgewählt ist;
R₈ und R₉ unabhängig ausgewählt sind aus Wasserstoff, Methyl, Ethyl und C₃-C₄-Alkyl;
R₁₀ ausgewählt ist aus C₁-C₈-Alkyl, C₂-C₈-Alkenyl, ungesättigten azyklischen C₆-C₁₀-, zyklischen C₆-C₁₀-, aromatischen C₆-C₁₀-, C₂-C₄-Alkylenoxid- und Poly(C₂-C₄-Alkylen)_{b}-Oxiden; wobei b eine ganze Zahl von 2 bis 20 ist.

2. Verfahren gemäß Anspruch 1, wobei das Metall Silber ist.

3. Verfahren gemäß Anspruch 1, wobei das Polymer einen oder mehrere Rückstände von Vinylimidazol beinhaltet.

## Revendications

1. Un procédé d'épuisement pour le finissage de tissu, consistant à submerger tout ou partie dudit tissu dans une composition antimicrobienne, puis à retirer ledit tissu de ladite composition, et ensuite à sécher ledit tissu ou à laisser ledit tissu sécher, dans lequel ladite composition antimicrobienne est un liquide,
dans lequel ladite composition antimicrobienne comprend de l'eau et un complexe de métal/polymère,
dans lequel le pH de ladite composition est de 6,5 ou moins ;
dans lequel la concentration dudit complexe de métal/polymère va de 0,005 % à 0,1 % en poids rapporté au poids de ladite composition ;
dans lequel ledit métal est sélectionné parmi le cuivre, l'argent, l'or, l'étain, le zinc, et des combinaisons de ceux-ci ;
dans lequel ledit polymère comprend des résidus de monomère sélectionnés parmi un résidu A, un résidu B, un résidu C, un résidu D, et des combinaisons de ceux-ci ; dans lequel ledit polymère contient 99,5 % ou moins en poids de résidus de résidu B, rapporté au poids dudit polymère ;
dans lequel le résidu A est 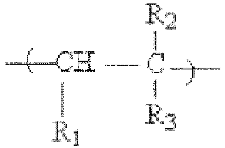 dans lequel le résidu B est 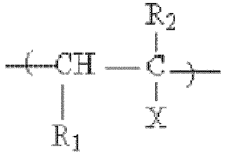 dans lequel le résidu C est 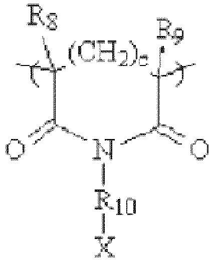 dans lequel le résidu D est le résidu d'un monomère réticulant,
dans lequel
X est un hétérocycle insaturé ou aromatique possédant au moins un hétéroatome sélectionné parmi N, O et S ;
c est 0 ou 1 ;
R₁ est sélectionné parmi H, CH₃ et -CO₂R₄ ; où R₄ est sélectionné parmi H, CH₃, C₂H₅, un alkyle en C₃-C₂₄ ;
R₂ est sélectionné parmi H, CH₃, C₂H₅, un phényle, -CH₂CO₂R₅ et -CO₂R₅ ; où R₅ est sélectionné parmi (I) à (V),
(I) H ;
(II) 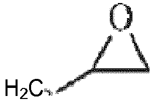
(III) -(CH₂CH(R₁₁)O)ₙH;
(IV) (CH₂CH(R₁₁)O)ₙCOCH₂COCH₃; et,
(V) 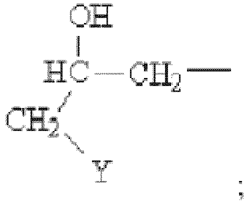
où R₁₁ est sélectionné parmi H, un méthyle et un phényle ; n est un entier allant de 1 à 20 ; Y est sélectionné parmi OH, SO₃Z et X ; où Z est sélectionné parmi H, le sodium, le potassium et NH₄⁺ ; à la condition que lorsque le polymère contient 0 % en poids de résidus de monomère de résidu B et 0 % en poids de résidus de monomère de résidu C, R₂ soit -CH₂CO₂R₅ ou -CO₂R₅, R₅ soit (V) et Y soit X ;
R₃ est sélectionné parmi H, un méthyle, un phényle, un phényle sulfoné, un phénol, un acétate, un hydroxy, un fragment O-R₁, où R₁ est tel que défini précédemment, -CO₂R₁₂ et -CONR₆R₇ ; où R₆ et R₇ sont indépendamment sélectionnés parmi H, un méthyle, un éthyle, C(CH₃)₂CH₂SO₃Z, où Z est tel que défini précédemment, un alkyle en C₃-C₈ et une structure en anneau combinée et R₁₂ est sélectionné parmi H, CH₃, C₂H₅ et un alkyle en C₃-C₂₄ ;
R₈ et R₉ sont indépendamment sélectionnés parmi l'hydrogène, un méthyle, un éthyle et un alkyle en C₃-C₄ ;
R₁₀ est sélectionné parmi un alkyle en C₁-C₈, un alcényle en C₂-C₈, un acyclique insaturé en C₆-C₁₀, un cyclique en C₆-C₁₀, un aromatique en C₆-C₁₀, un oxyde d'alkylène en C₂-C₄ et des poly(oxydes d'(alkylène en C₂-C₄)_{b}) ; où b est un entier allant de 2 à 20.

2. Le procédé de la revendication 1, dans lequel ledit métal est l'argent.

3. Le procédé de la revendication 1, dans lequel ledit polymère comprend un ou plusieurs résidus de vinylimidazole.
